# EUROPÄISCHE PATENTSCHRIFT

(11) **EP 2 264 626 B1**
(45) Veröffentlichungstag und Bekanntmachung des Hinweises auf die Patenterteilung: **24.02.2021**
(21) Anmeldenummer: 09010241.9
(22) Anmeldetag: 07.08.2009
(51) Int. Cl.: G06F 16/901

(54) **Verfahren und Vorrichtung zum speichereffizienten Suchen mindestens eines Anfragedatenelementes**
Method and device for efficient searching for at least one query data element
Procédé et dispositif de recherche à efficacité de stockage d'au moins un élément de données de demande

(30) Priorität: 19.06.2009 EP 09008060
(43) Veröffentlichungstag der Anmeldung: 22.12.2010
(73) Patentinhaber: Siemens Aktiengesellschaft, 80333 München (DE)
(72) Erfinder: Heuer, Jörg, 82041 Oberhaching (DE); Kind, Roland, 14482 Potsdam (DE); Kuntschke, Richard, 84144 Geisenhausen (DE); Peintner, Daniel, 39037 Mühlbach (IT)

(56) Entgegenhaltungen:
- EP-A- 0 408 188
- EP-A- 1 052 576
- EP-A- 1 808 987
- WO-A-2005/008521
- US-A1- 2003 212 664
- US-A1- 2008 154 893

## Beschreibung

Die vorliegende Erfindung umfasst ein Verfahren zum Suchen von Datenelementen auf ressourcenbeschränkten Endgeräten und insbesondere ein Verfahren zum speichereffizienten Suchen mindestens eines Anfragedatenelementes in einem Graph. Die vorliegende Erfindung umfasst ferner eine entsprechende Vorrichtung zum speichereffizienten Suchen mindestens eines Anfragedatenelementes in einem Graph. Ferner umfasst die vorliegende Erfindung ein Computerprogrammprodukt, welches die Durchführung des vorgenannten Verfahrens veranlasst sowie einen Datenspeicher zum Abspeichern des Computerprogrammproduktes.

Steuerungs- und Konfigurationsalgorithmen werden durch stetige Weiterentwicklung sehr umfangreich und komplex. Hieraus ergibt sich, dass elektronische Geräte und insbesondere mobile Endgeräte einen höheren Umfang an Ressourcen zu deren Abarbeitung bereitstellen müssen. Daher werden in herkömmlichen Verfahren mobile Endgeräte mit großen Datenspeichern ausgestattet. Dies bedeutet typischerweise einen erhöhten Aufwand bezüglich dem Einbringen von Geräteressourcen in das elektronische Gerät, da diese Geräteressourcen einen erhöhten Platzbedarf aufweisen. Daher kann der Speicherbedarf zum Beispiel in herkömmlichen Verfahren nicht mehr durch ein einziges Speicherelement gedeckt werden, sondern eine Vielzahl an Speicherelementen müssen sowohl zum Abspeichern der Steuerungs- und Konfigurationsdaten, als auch zum Abarbeiten der Steuerungs- und Konfigurationsalgorithmen bereitgestellt werden.

Zum Bearbeiten der umfangreichen Datensätze sind typischerweise hochgetaktete Prozessoren notwendig. Diese hochgetakteten Prozessoren weisen eine verstärkte Wärmeentwicklung auf, so dass beim Ausführen herkömmlicher Verfahren passive oder aktive Kühlelemente notwendig werden. Sowohl durch hochgetaktete Prozessoren als auch durch eine Vielzahl an Datenspeichern steigt der Energiebedarf des elektronischen Gerätes an. Dies führt insbesondere bei mobilen Endgeräten zu einer verkürzten Einsatzfähigkeit, da Energiespeicher nur eine stark beschränkte Betriebszeit der Vielzahl von Geräteressourcen erlauben.

Sowohl in mobilen als auch in stationären Anwendungsszenarien bei denen ein Suchen von Anfragedatenelementen erfolgt, wirken mehrere Rechnersysteme über eine Luftschnittstelle zusammen. Zum Beispiel stellt ein Server ein Anfragedatenelement einem Client bereit, wobei das Suchen des Anfrageelementes basierend auf einem Datensatz auf dem Client durchgeführt wird. Das Bereitstellen des Anfragedatenelementes sowie ein daraus resultierendes Bereitstellen von Rückgabeparametern erfolgt zum Beispiel mittels einer Luftschnittstelle. Hierbei kommt es zu einem hohen Datenaufkommen, welches zum Beispiel über ein WLAN-Netzwerk übermittelt werden muss. Dabei kann es zu einem Datenverlust und/oder zu einem Abhören der übermittelten Daten kommen. Ferner müssen effiziente Netzwerkgeräte und große Datenspeicher bereitgestellt werden.

Um einen Speicherbedarf zu optimieren werden in herkömmlichen Verfahren Komprimierungsalgorithmen angewendet. Es wird dabei versucht durch eine geschickte Codierung der Datensätze weniger Speicherbedarf zu verursachen. Diese Komprimierungsalgorithmen können je nach Anwendungsszenario verlustbehaftet oder verlustfrei sein. Bei einer verlustbehafteten Kodierung wird ein Datenverlust bis zu einem bestimmten Grad akzeptiert, falls dieser Datenverlust durch einen verringerten Speicherbedarf gerechtfertigt erscheint. Die Datensätze werden auf der Senderseite komprimiert und auf der Empfängerseite dekomprimiert. Hierzu sind jeweils Systemressourcen zur Abarbeitung der Komprimierungsalgorithmen bzw. der Dekomprimierungsalgorithmen notwendig.

Ferner sind aus herkömmlichen Verfahren formatspezifische Kodierspezifikationen bekannt, welche zum Beispiel eine Binärkodierung für XML-Dokumente anwenden. Ein Beispiel hierfür ist das Efficient XML Interchange (EXI) Format.

Die Abarbeitung von umfangreichen Konfigurations- und Steueralgorithmen führt in herkömmlichen Verfahren zu einem erhöhten Ressourcenbedarf und, somit implizit zu einem höheren Energiebedarf und zu verzögerten Antwortzeiten, insbesondere durch Abarbeiten von Komprimierungsalgorithmen und Dekomprimierungsalgorithmen. Typischerweise wird hierbei auch häufiger auf bereitgestellte Datensätze zugegriffen, als es zum effizienten Suchen eines Anfragedatenelementes notwendig ist

Die Patentschrift US 2008/154893 A1 offenbart ein bekanntes Verfahren zur Suche in einem Graphen, welcher auf der Struktur von XML-Dokumenten basiert, die Patentschrift EP-A-0 408 188 ein entsprechendes Suchverfahren für Netzwerkadressen.

Es ist daher eine Aufgabe der vorliegenden Erfindung ein verbessertes Verfahren bzw. eine verbesserte Vorrichtung zum speichereffizienten Suchen mindestens eines Anfragedatenelementes in einem Graph bereitzustellen.

Diese Aufgabe wird durch ein Verfahren mit den Merkmalen des Patentanspruchs 1 gelöst.

Demgemäß ist ein Verfahren zum speichereffizienten Suchen mindestens eines Anfragedatenelementes in einem Graph vorgesehen. Das Verfahren zum speichereffizienten Suchen wird zumindest durch die im Anspruch 1 aufgeführten Merkmale definiert.

Weitere Ausführungsbeispiele werden in den vom Verfahrensanspruch abhängigen Ansprüchen definiert. Bei einem Graphen handelt es sich um eine Z Datenstruktur, welche Datenelemente bereitstellt, die mittels Relationen in Verbindung stehen. Es kann sich zum Beispiel um eine Baumstruktur handeln, welche durch Knoten und Kanten präsentiert wird. Eine Baumstruktur stellt hierbei eine Menge an Datenelementen, welche durch Knoten repräsentiert werden, bereit. Diese Datenelemente sind hierarchisch mittels Relationen angeordnet, wobei Relationen mittels Kanten repräsentiert werden.

Der Graph weist ferner eine Auswahl an Datenelementen auf, welche als Wurzeldatenelement, Oberdatenelement, Unterdatenelement und/oder Anfragedatenelement bezeichnet werden können. Ein Wurzeldatenelement ist hierbei ein einzelnes Datenelement des Graphen, welches bei dem speichereffizienten Suchen des mindestens einen Anfragedatenelementes als ein Oberdatenelement agieren kann. Ein Oberdatenelement weist jeweils eine Kante auf, welche das Oberdatenelement mit einem Unterdatenelement verbindet. Datenelemente, welche mit jeweils nur einer Kante mit einem weiteren Datenelement verbunden sind, agieren als Unterdatenelemente und können folglich auch als Blattdatenelemente bezeichnet werden.

Ein Anfragedatenelement ist ein Datenelement, welches in einem bereitgestellten Graph identifiziert werden soll. Hierbei ist es möglich, dass das Anfragedatenelement in dem Graph enthalten ist, oder dass das Anfragedatenelement nicht in dem Graph enthalten ist und somit ein Rückgabewert ausgegeben wird, der das Nichtvorhandensein des Anfragedatenelementes in dem Graph beschreibt. Es ist zum Beispiel möglich, dass falls der Graph gemäß dem Verfahren zum speichereffizienten Suchen mindestens eines Anfragedatenelementes bis zu mindestens einem Blattdatenelemente abgearbeitet ist, das Anfragedatenelement als nicht in dem Graph enthalten bezeichnet wird. Dies kann zum Beispiel mittels eines Booleschen Wertes und/oder einer entsprechenden Fehlermeldung angezeigt werden. Es kann auch vorkommen, dass das Anfragedatenelement mehrere Anfragedatensegmente aufweist, wobei in dem Graphen alle Anfragedatensegmente des Anfragedatenelementes identifiziert werden müssen. Erfolgt keine vollständige Identifizierung aller Anfragedatensegmente des Anfragedatenelementes, so gilt das Anfragedatenelement als nicht in dem Graph enthalten. Werden jedoch alle Anfragedatensegmente des Anfragedatenelementes in dem Graphen identifiziert, so gilt das Anfragedatenelement als in dem Graph enthalten. Hierbei kann eine entsprechende Fundstelle des Anfragedatenelementes in dem Graph ausgegeben werden und/oder eine positive Antwortnachricht ausgegeben werden.

Ein Anfragedatenelement kann zum Beispiel einen Pfad innerhalb eines Graphen beschreiben. Hierzu kann das Anfragedatenelement eine Aufreihung von Knoten angeben, welche den Pfad von einem Wurzeldatenelement zu einem Anfragedatenelementsegment beschreiben. Folglich beschreibt das Anfragedatenelement einen Pfad in dem Graph, und das Anfragedatensegment beschreibt jeweils einen Knoten und/oder eine Kante in dem Graph. Zum Beispiel besteht der Graph aus den Knoten "E1", "E2" und "E3", welche zu einem Pfad angeordnet sind. Das Anfragedatenelement kann zum Beispiel den Ausdruck "E1/E2/E3" aufweisen. Ein Anfragedatensegment ist hierbei "E1". Ein weiteres Anfragedatensegment kann zum Beispiel den Wert "E2" oder "E3" aufweisen.

Es ist ferner auch möglich, dass das Anfragedatenelement einen Verzeichnispfad beschreibt und der Graph eine Verzeichnisstruktur repräsentiert. Ein Anfragedatensegment kann zum Beispiel ein einzelnes Verzeichnis beschreiben. Alternativ ist es auch möglich, dass mehrere Verzeichnisse bzw. mehrere Knoten zu einem einzelnen Anfragedatensegment zusammengefasst werden. Bei einem Graphen können zum Beispiel die Elemente "E1" und "E2" zu einem einzelnen Anfragedatensegment "E1/E2" zusammengefasst werden. Zum Identifizieren der einzelnen Anfragedatensegmente kann ein Segmentieren des Anfragedatenelementes angewendet werden. Hierbei kann eine vordefinierte Metrik angewendet werden, welche beschreibt, wie das Anfragedatenelement in mindestens einem Anfragedatensegment segmentiert werden soll.

Zum Suchen des mindestens einen Anfragedatenelements in dem Graph erfolgt ein Vergleichen eines Unterdatenelementes mit einem Anfragedatensegment, wobei das Unterdatenelement mit einem Oberdatenelement mittels genau einer Kante in dem Graph verbunden ist.

Das Oberdatenelement kann in einem ersten Ausführen dieses Unterschrittes einem Wurzeldatenelement entsprechen. Für den Fall, dass in den gespeicherten Daten kein Wurzeldatenelement ausgewiesen ist, kann dieser Unterschritt weitere Unterschritte umfassen, wie zum Beispiel das Identifizieren eines Wurzeldatenelementes in dem Graphen. Das Oberdatenelement kann zum Beispiel als ein Datenelement "E1" beschrieben werden. Bei einem Vergleichen des Unterdatenelementes mit einem Anfragedatensegment wird überprüft, ob das Anfragedatensegment zumindest teilweise in dem Unterdatenelement enthalten bzw. umfasst ist. Hierbei kann es auch vorteilhaft sein, zu prüfen, ob das Anfragedatensegment vollständig in dem Unterdatenelement enthalten ist.

Ist das Anfragedatensegment in dem Unterdatenelement enthalten, so wird dieses Unterdatenelement als ein Oberdatenelement abgespeichert. Das heißt, dass sich weitere Verfahrensschritte auf dieses neue Oberdatenelement, welches in vorherigen Verfahrensschritten als Unterdatenelement agiert hat, beziehen.

Oberdatenelemente sind mit Unterdatenelementen, welche mit einem Anfragedatensegment verglichen werden, mittels genau einer Kante verbunden. Folglich ist es nicht notwendig, eine Vielzahl von Unterdatenelementen bzw. Unterbäumen des Graphen in den Speicher zu laden. Wird ein Unterdatenelement identifiziert, welches ein Anfragedatensegment aufweist, so erfolgt in einem weiteren iterativen Vergleichen des Unterdatenelementes mit einem Anfragedatensegment lediglich ein Abspeichern des Unterdatenelementes, falls das Anfragedatensegment tatsächlich auch identifiziert wird.

Wird das Anfragedatensegment nicht in dem Unterdatenelement identifiziert, so erfolgt kein Abspeichern des Unterdatenelementes als Oberdatenelement, sondern ein erneutes Vergleichen eines weiteren Unterdatenelementes mit einem Anfragedatensegment. Hierbei erfolgt kein Abspeichern von weiteren Unterdatenelementen. Wird festgestellt, dass ein Unterdatenelement kein Anfragedatensegment aufweist, so kann dieses Unterdatenelement unmittelbar nach dem Vergleichen dieses Unterdatenelementes mit dem Anfragedatensegment aus dem Speicher entfernt werden.

Wird zum Beispiel ein Pfad "E1/E2/E3" in einem Graph gesucht, so erfolgt in einem ersten Verfahrensschritt ein Identifizieren des Wurzeldatenelementes "E1". Das Wurzeldatenelement "E1" bildet nun ein Oberdatenelement "E1". Es erfolgt ein Vergleichen eines Unterdatenelementes "Ex" mit einem Anfragedatensegment "E2", so wird festgestellt, dass dieses Unterdatenelement "Ex" nicht mit dem Anfragedatensegment "E2" übereinstimmt. Folglich erfolgt kein Abspeichern des Unterdatenelementes "Ex" als Oberdatenelement. In einem weiteren Ausführen des Vergleichens eines weiteren Unterdatenelementes "E2" mit einem Anfragedatensegment "E2" wird festgestellt, dass dieses Unterdatenelement "E2" mit dem Anfragedatensegment "E2" übereinstimmt. Folglich erfolgt ein Abspeichern des Unterdatenelementes "E2" als Oberdatenelement "E2". In einem weiteren Ausführen des Vergleichens eines Unterdatenelementes "E3" mit einem Anfragedatensegment "E3" wird festgestellt, dass das Unterdatenelement "E3" des Oberdatenelementes "E2" mit dem Anfragedatensegment "E3" übereinstimmt. Folglich wurden alle Anfragedatensegmente "E1", "E2" und "E3" des Anfragedatenelementes "E1/E2/E3/" identifiziert.

Folglich erfolgt ein Bereitstellen des abgespeicherten Oberdatenelementes "E3". Alternativ kann auch eine positive Antwortnachricht, zum Beispiel der Boolesche Wert "true" ausgegeben werden.

Ferner ist es möglich, dass zumindest eine Auswahl der Datenelemente des Graphen weitere Attribute aufweist. Bei einem Bereitstellen des abgespeicherten Oberdatenelementes können folglich auch weitere Attribute dieses Oberdatenelementes ausgegeben werden.

In einer Ausführungsform der vorliegenden Erfindung erfolgt das Abspeichern des Unterdatenelementes als Oberdatenelement derart, dass ein zeitlich zuerst abgespeichertes Oberdatenelement durch das Unterdatenelement überschrieben wird.

Dies bietet den Vorteil, dass lediglich benötigte Oberdatenelemente abgespeichert werden, und falls Oberdatenelemente nicht mehr benötigt werden, diese entsprechend überschrieben werden.

In einer weiteren Ausführungsform der vorliegenden Erfindung erfolgt das Abspeichern des Unterdatenelements als Oberdatenelement derart, dass ein zeitlich zuerst abgespeichertes Oberdatenelement aus einem Speicher gelöscht wird und das Unterdatenelement in den Speicher geschrieben wird.

Dies hat den Vorteil, dass durch ein Löschen nicht mehr benötigter Oberdatenelemente Speicherplatz freigegeben wird.

In einer weiteren Ausführungsform der vorliegenden Erfindung wird das Anfragedatenelement in eine Mehrzahl von geordneten Anfragedatensegmenten segmentiert und das Identifizieren der Anfragedatensegmente in dem Graph gemäß dieser Ordnung ausgeführt.

Dies bietet den Vorteil, dass zum Beispiel ein Pfad in einem Graph sequentiell abgearbeitet werden kann.

In einer weiteren Ausführungsform der vorliegenden Erfindung beschreibt das Anfragedatenelement einen Pfad in dem Graphen.

Dies bietet den Vorteil, dass der Graph mit bereits implementierten Algorithmen, welche als Eingabewert einen Pfad in einem Graph entgegennehmen, durchsucht werden kann.

In einer weiteren Ausführungsform der vorliegenden Erfindung weist das Anfragedatensegment einen Binärcode, ein Oberdatenelement, ein Unterdatenelement, einen Knoten, eine URL, eine URI, einen virtuellen Ordner und/oder einen Dateinamen auf.

Dies bietet den Vorteil, dass das Anfragedatensegment eine Vielzahl von Datenelementen aufweisen kann, und somit in einer Vielzahl von Anwendungsszenarien eingesetzt werden kann.

In einer weiteren Ausführungsform der vorliegenden Erfindung wird zumindest ein Teil des Graphen durch ein XML-Dokument, einem Binärcode, eine graphische Repräsentation, eine textuelle Beschreibung, eine Ontologiesprache, ein formales Modell, eine relationale Datenbank und/oder eine Graphenbeschreibungssprache beschrieben.

Dies schafft den Vorteil, dass der Graph auf eine Vielzahl von Repräsentationsformen beschrieben werden kann. Dies hat ferner den Vorteil, dass bestehende Repräsentationen von Graphen Wiederverwendung finden können.

In einer weiteren Ausführungsform der vorliegenden Erfindung entspricht bei einem ersten Vergleichen des Unterdatenelementes mit dem Anfragedatensegment das Oberdatenelement einem Wurzeldatenelement.

Dies bietet den Vorteil, dass in dem Graph Pfade abgesucht werden können, welche typischerweise mit einem Wurzeldatenelement beginnen.

In einer weiteren Ausführungsform der vorliegenden Erfindung weist das Anfragedatensegment, das Anfragedatenelement, das Unterdatenelement und/oder das Oberdatenelement mindestens ein Attribut auf.

Dies bietet den Vorteil, dass die Datenelemente weitere Attribute aufweisen können, welche zum Beispiel bei der Suche und/oder dem Vergleichen des Anfragedatenelementes Verwendung finden. Ferner können Zusatzinformationen ausgegeben werden, welche mit den Datenelementen verknüpft wurden.

Die Erfindung umfasst ferner eine Vorrichtung zum speichereffizienten Suchen mindestens eines Anfragedatenelementes in einem Graph, insbesondere unter Verwendung eines der vorgenannten Verfahren.

Die Vorrichtung weist eine Segmentiereinheit zum Segmentieren des Anfragedatenelementes in mindestens ein Anfragedatensegment auf.

Die Vorrichtung weist ferner eine Iterationseinheit zum iterativen Ausführen der folgenden Unterschritte zum Identifizieren des mindestens einen Anfragedatensegmentes auf:
a) Vergleichen eines Unterdatenelementes mit dem jeweiligen Anfragedatensegment, wobei das Unterdatenelement mit einem Oberdatenelement mittels genau einer Kante in dem Graph verbunden ist; und
b) Abspeichern des Unterdatenelementes als Oberdatenelement, falls das Unterdatenelement das jeweilige Anfragedatensegment aufweist.

Die Vorrichtung weist ferner eine Oberdatenelementbereitstellungseinheit zum Bereitstellen des abgespeicherten Oberdatenelementes, falls das mindestens eine Anfragedatensegment in dem Graph identifiziert ist, auf.

In einer Ausführungsform der vorliegenden Erfindung weist die Vorrichtung einen Datenspeicher zum Abspeichern von mindestens einem Teil des Graphen auf.

Dies bietet den Vorteil, dass die Vorrichtung zum Beispiel einen flüchtigen Datenspeicher zum Abspeichern von Zwischenergebnissen, zum Beispiel einem Oberdatenelement, bereitstellt.

In einer weiteren Ausführungsform der vorliegenden Erfindung umfasst die Vorrichtung eine Ausleseeinheit zum Auslesen von mindestens einem Teil des Graphen aus einem entfernten Datenspeicher.

Dies hat den Vorteil, dass zumindest ein Teil des Graphen mittels einer Datenverbindung aus einem entfernten Datenspeicher ausgelesen werden kann. Zum Beispiel kann es sich bei der Vorrichtung um einen Client handeln, welcher mindestens einen Teil des Graphen aus einem entfernten Datenserver ausliest.

In einer weiteren Ausführungsform der vorliegenden Erfindung weist die Vorrichtung eine erste Schnittstelleneinheit zum Empfang zumindest eines Teils des Graphen, des Anfragendatenelementes, des Anfragedatensegmentes, des Oberdatenelementes und/oder des Unterdatenelementes auf.

Das bietet den Vorteil, dass eine bereits implementierte Schnittstelle zum Empfangen der Datenelemente verwendet werden kann.

In einer weiteren Ausführungsform der vorliegenden Erfindung weist die Vorrichtung eine zweite Schnittstelleneinheit zum Bereitstellen zumindest eines Teils des Graphen, des Anfragedatenelementes, des Anfragedatensegmentes, des Oberdatenelementes und/oder des Unterdatenelementes auf.

Dies bietet den Vorteil, dass eine bereits implementierte Schnittstelle zum Bereitstellen der Datenelemente verwendet werden kann.

In einer weiteren Ausführungsform der vorliegenden Erfindung entspricht die erste Schnittstelle der zweiten Schnittstelle, bzw. liegen die erste Schnittstelle und die zweite Schnittstelle als eine kombinierte Schnittstelle vor.

Dies hat den Vorteil, dass eine einzige Schnittstelleneinheit zum Empfangen und Bereitstellen von Datenelementen Verwendung finden kann.

Die Erfindung umfasst ferner ein Computerprogrammprodukt, welches Befehle umfasst, die bei Ausführung auf einem Computer diesen zur Durchführung eines der vorgenannten Verfahren veranlassen sowie einen Datenspeicher , auf dem ein entprechendes Computerprogrammprodukt abgespeichert ist.

Somit werden ein Verfahren und eine Vorrichtung zum speichereffizienten Suchen mindestens eines Anfragedatenelementes in einem Graph bereitgestellt.

Weitere vorteilhafte Ausgestaltungen der Erfindung sind Gegenstand der Unteransprüche sowie der im Folgenden beschriebenen Ausführungsbeispiele. Im Weiteren wird die Erfindung anhand beispielhafter Implementierungen unter Bezugnahme auf die beigelegten Figuren näher erläutert.

Es zeigt dabei:
- Fig. 1: ein Speicherbedarfsdiagramm, welches einen Speicherbedarf gemäß herkömmlicher Verfahren und einen Speicherbedarf eines Verfahrens zum speichereffizienten Suchen gemäß der vorliegenden Erfindung gegenüberstellt;
- Fig. 2: ein Ablaufdiagramm eines Verfahrens zum speichereffizienten Suchen mindestens eines Anfragedatenelementes gemäß einer Ausführungsform der vorliegenden Erfindung;
- Fig. 3: ein detailliertes Ablaufdiagramm eines Verfahrens zum speichereffizienten Suchen mindestens eines Anfragedatenelementes gemäß einer Ausführungsform der vorliegenden Erfindung;
- Fig. 4: ein Baumdiagramm eines kodierten Dokuments gemäß einem Verfahren zum speichereffizienten Suchen mindestens eines Anfragedatenelementes gemäß einer Ausführungsform der vorliegenden Erfindung;
- Fig. 5: ein Blockdiagramm einer Vorrichtung zum speichereffizienten Suchen mindestens eines Anfragedatenelementes gemäß einer Ausführungsform der vorliegenden Erfindung; und
- Fig. 6: ein detailliertes Blockdiagramm einer Vorrichtung zum speichereffizienten Suchen mindestens eines Anfragedatenelementes gemäß einer Ausführungsform der vorliegenden Erfindung.

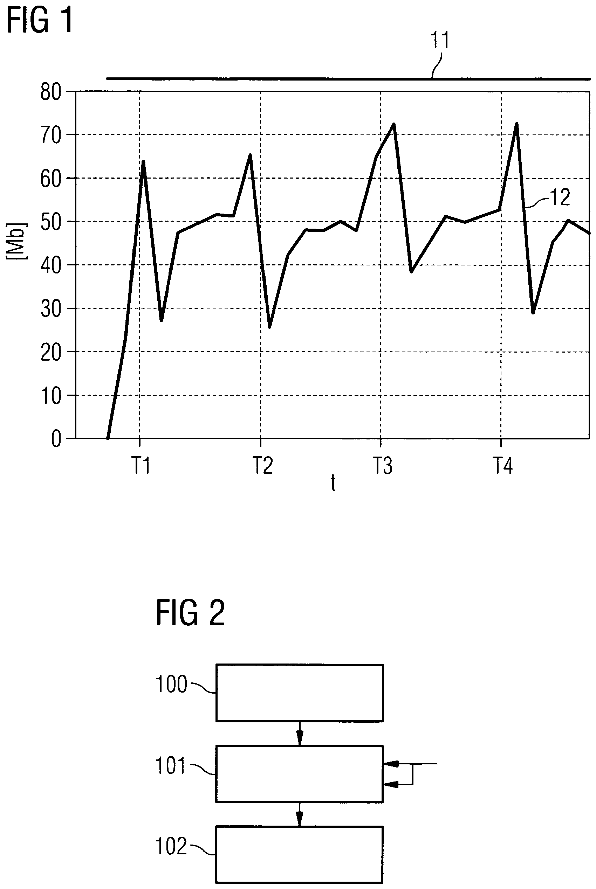

In den Figuren 1 bis 6 sind gleiche bzw. funktionsgleiche Elemente mit den gleichen Bezugszeichen versehen, sofern nichts anderes angegeben ist.

Fig. 1 zeigt ein Speicherbedarfsdiagramm, in dem an der y-Achse ein Speicherbedarf jeweils zu einem bestimmten Zeitpunkt, welcher an der x-Achse eingetragen ist, dargestellt ist. Bei einem Suchen mindestens eines Anfragedatenelementes gemäß einem herkömmlichen Verfahren, bei dem zum Beispiel der gesamte Graph in einen Datenspeicher geladen wird, kommt es zu einem konstanten Speicherbedarf während des Suchens von über 80 MB. Dies ist in der vorliegenden Fig. 1 mittels der konstanten Speicherkurve 11 angedeutet.

Bei einem Ausführen des speichereffizienten Suchens mindestens eines Anfragedatenelementes in dem Graph gemäß dem erfindungsgemäßen Verfahren gelangt man zu einem maximalen Speicherbedarf von 73 MB zu einem Zeitpunkt T4. Weitere temporäre Maxima bezüglich des Speicherbedarfs werden zu Zeitpunkten T1, T2 und T3 erreicht. Da es bei dem Ausführen des speichereffizienten Suchens mindestens eines Anfragedatenelementes in dem Graph gemäß einem Aspekt der vorliegenden Erfindung zu einem Löschen von mindestens einem Datenelement kommt bzw. abgespeicherte Datenelemente aus dem Speicher gelöscht werden, kommt es jeweils nach einem Erreichen der Spitzenwerte zu den Zeitpunkten T1, T2, T3 und T4 zu einem verringerten Speicherbedarf. Ein beispielhafter Speicherbedarfverlauf gemäß dem Verfahren zum speichereffizienten Suchen mindestens eines Anfragedatenelementes gemäß einem Aspekt der vorliegenden Erfindung ist mittels der Speicherbedarfskurve 12 angedeutet.

Besonders vorteilhaft ist der Einsatz des speichereffizienten Suchens mindestens eines Anfragedatenelementes in dem Graph bei speicherbeschränkten Endgeräten. Im vorliegenden Ausführungsbeispiel verfügt ein mobiles Endgerät, welches das erfindungsgemäße Verfahren zum speichereffizienten Suchen ausführt, über einen Speicherplatz von 75 MB. Folglich lässt sich ein Suchen gemäß herkömmlichre Verfahren auf einem Graph, welcher mehr als 80 MB in Anspruch nimmt, nicht auf diesem Endgerät ausführen. Da im vorliegenden Ausführungsbeispiel der maximale Speicherbedarf des Verfahrens zum speichereffizienten Suchen mindestens eines Anfragedatenelementes gemäß einem Aspekt der vorliegenden Erfindung lediglich einen maximalen Speicherbedarf von 73 MB zum Zeitpunkt T4 hat, kann das Anfragedatenelement auf diesem Endgerät ausgeführt werden, ohne dass es zu Speicherproblemen kommt. Ein Überlaufen des Speichers, auch Buffer Overflow genannt, eines Speichers des mobilen Endgeräts wird somit vermieden.

Fig. 2 zeigt ein Ablaufdiagramm eines Verfahrens zum speichereffizienten Suchen mindestens eines Anfragedatenelementes in einem Graph gemäß einem Aspekt der vorliegenden Erfindung. Das Verfahren weist die folgenden Schritte auf:
In einem ersten Verfahrensschritt 100 erfolgt ein Segmentieren des Anfragedatenelementes in mindestens ein Anfragedatensegment.

In einem zweiten Verfahrensschritt 101 erfolgt ein iteratives Ausführen der folgenden Unterschritte zum Identifizieren des mindestens einen Anfragedatensegmentes in dem Graph:
a) Vergleichen eines Unterdatenelementes mit dem jeweiligen Anfragedatensegment, wobei das Unterdatenelement mit einem Oberdatenelement mittels genau einer Kante in dem Graph verbunden ist; und
b) Abspeichern des Unterdatenelementes als Oberdatenelement, falls das Unterdatenelement mindestens ein Anfragedatensegment aufweist.

In einem letzten Verfahrensschritt 102 erfolgt ein Bereitstellen des abgespeicherten Oberdatenelementes, falls das mindestens eine Anfragedatensegment in dem Graph identifiziert wurde.

Die beschriebenen Verfahrensschritte können iterativ ausgeführt werden.

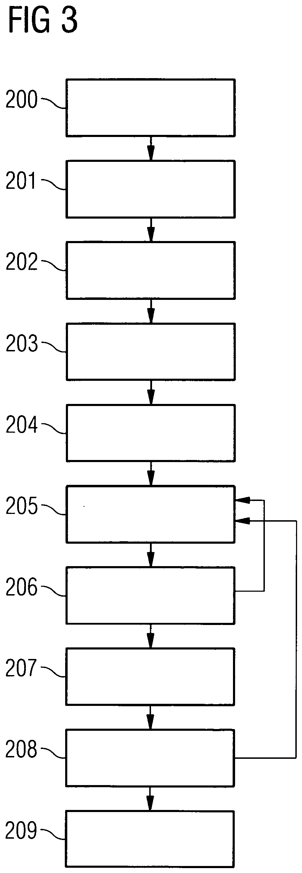

Fig. 3 zeigt ein detailliertes Ablaufdiagramm eines Verfahrens zum speichereffizienten Suchen mindestens eines Anfragedatenelementes in einem Graph gemäß einer Ausführungsform der vorliegenden Erfindung und weist die folgenden Verfahrensschritte auf:
In einem ersten Verfahrensschritt 200 erfolgt ein Bereitstellen des Graphen. Hierbei wird zum Beispiel einem mobilen Endgerät mitgeteilt, dass ein Graph zu einer weiteren Verarbeitung, zum Beispiel zu einem Durchsuchen, bereitsteht. Das Bereitstellen des Graphen kann mittels einer Angabe einer URL erfolgen. Bei dem Graph kann es sich auch um eine Repräsentation des Graphen handeln, zum Beispiel eine XML-Datei. Folglich erfolgt in dem Verfahrensschritt 200 ein Bereitstellen einer XML-Datei. Das Bereitstellen des Graphen kann mehrere Unterschritte umfassen, wie zum Beispiel das Übermitteln des Graphen an das mobile Endgerät.

In einem darauffolgenden Verfahrensschritt 201 erfolgt ein Bereitstellen eines Anfragedatenelementes. Das Anfragedatenelement kann zum Beispiel einen Pfad in dem in Verfahrensschritt 200 bereitgestellten Graphen aufweisen. Das Anfragedatenelement kann aber auch ein einzelnes Knotenelement des Graphen beschreiben. Für den Fall, dass die Knoten des Graphen weitere Attribute aufweisen, kann sich das Anfragedatenelement auf diese weitere Attribute beziehen. Weitere Attribute der Datenelemente können zum Beispiel eine Gültigkeit des jeweiligen Datenelementes beschreiben, wobei das Anfragedatenelement nur mit denjenigen Datenelementen verglichen wird, die gemäß einer Spezifikation des Anfragedatenelementes gültig sind.

In weiteren Verfahrensschritten erfolgt ein Segmentieren des Anfragedatenelementes, wozu in einem weiteren Verfahrensschritt 202 eine Metrik bereitgestellt wird, welche beschreibt, wie das Anfragedatenelement in mindestens ein Anfragedatensegment unterteilt werden soll. Die in dem Verfahrensschritt 202 bereitgestellte Metrik beschreibt zum Beispiel, dass einzelne Anfragedatensegmente in dem Anfragedatenelement mittels Schrägstrichen getrennt sind.

In einem darauffolgenden Verfahrensschritt 203 kann somit ein Segmentieren des Anfragedatenelementes in mindestens ein Anfragedatensegment gemäß der in Verfahrensschritt 202 bereitgestellten Metrik erfolgen. Das Segmentieren kann weitere Unterschritte umfassen, wie zum Beispiel das Parsen des Anfragedatenelementes. Hierbei kann z. B. bei jeder Fundstelle eines Schrägstrichs in dem Anfragedatenelement ein neues Anfragedatensegment erzeugt werden. Folglich erfolgt in dem Verfahrensschritt 203 ein Segmentieren des Anfragedatenelementes in die einzelnen Anfragedatensegmente. Dies kann in einer gewissen Reihenfolge ausgeführt werden, welche bei einem Identifizieren der Anfragedatensegmente in dem Graph eingehalten werden muss. Dies ist insbesondere dann notwendig, wenn es sich bei dem Anfragedatenelement um einen Pfad handelt, der eine geordnete Menge von Knoten innerhalb des Graphs beschreibt.

In einem darauffolgenden Verfahrensschritt 204 erfolgt ein Identifizieren eines Oberdatenelementes. Bei einem Oberdatenelement kann es sich zum Beispiel um ein Wurzelelement des Graphs handeln. Verfügt der Graph über kein ausgewiesenes Wurzeldatenelement, so wird in weiteren Unterschritten ein Oberdatenelement identifiziert. Hierbei können weitere Metriken, wie zum Beispiel eine Zentralität eines Knotens, Anwendung finden.

In einem darauffolgenden Verfahrensschritt 205 erfolgt ein Identifizieren eines Unterdatenelementes, wobei das Unterdatenelement mit einem Oberdatenelement mittels genau einer Kante in dem Graph verbunden ist. Folglich wird in dem Verfahrensschritt 205 eine Kante identifiziert, welche das Oberdatenelement und das Unterdatenelement verbindet.

Das identifizierte Unterdatenelement wird in dem Verfahrensschritt 206 mit mindestens eines Teils des Anfragedatenelementes bzw. mindestens einem Anfragedatensegment verglichen. Für den Fall, dass das Unterdatenelement nicht das Anfragedatensegment aufweist, wird zurück in den Verfahrensschritt 205 verzweigt. Somit erfolgt ein Identifizieren eines weiteren Unterdatenelementes in dem Verfahrensschritt 205. Die Verfahrensschritt 205 und 206 werden solange iteriert, bis bei einem Vergleichen in dem Verfahrensschritt 206 ein Unterdatenelement identifiziert wird, welches mindestens ein Anfragedatensegment aufweist. Alternativ kann auch ein Abbruchkriterium definiert werden, welches eine Endlosschleife verhindert. Wird in dem Verfahrensschritt 206 ein Unterdatenelement identifiziert, welches das mindestens eine Anfragedatensegment aufweist, so erfolgt in einem Verfahrensschritt 207 ein Abspeichern des Unterdatenelementes als Oberdatenelement.

Da nun mindestens ein Anfragedatensegment in dem Graph identifiziert wurde, wird in dem Verfahrensschritt 208 geprüft, ob alle Anfragedatensegmente bzw. das Anfragedatenelement in dem Graphen identifiziert wurde. Für den Fall, dass das Anfragedatenelement noch nicht vollständig identifiziert wurde, wird erneut in den Verfahrensschritt 205 verzweigt. Folglich erfolgt ein erneutes Identifizieren eines weiteren Unterdatenelementes bezüglich dem neuen Oberdatenelement. Wird hingegen in dem Verfahrensschritt 208 festgestellt, dass das Anfragedatenelement bzw. alle Anfragedatensegmente identifiziert wurden, so wird in einem darauffolgenden Verfahrensschritt 209 ein Ausgeben des abgespeicherten Oberdatenelementes veranlasst. Alternativ kann eine entsprechend positive Antwortnachricht ausgegeben werden.

In einem weiteren Ausführungsbeispiel können Abbruchkriterien definiert werden, welche zum Beispiel bei einem Erreichen eines Blattdatenelementes festlegen, dass das Anfragedatenelement nicht in dem Graph enthalten ist.

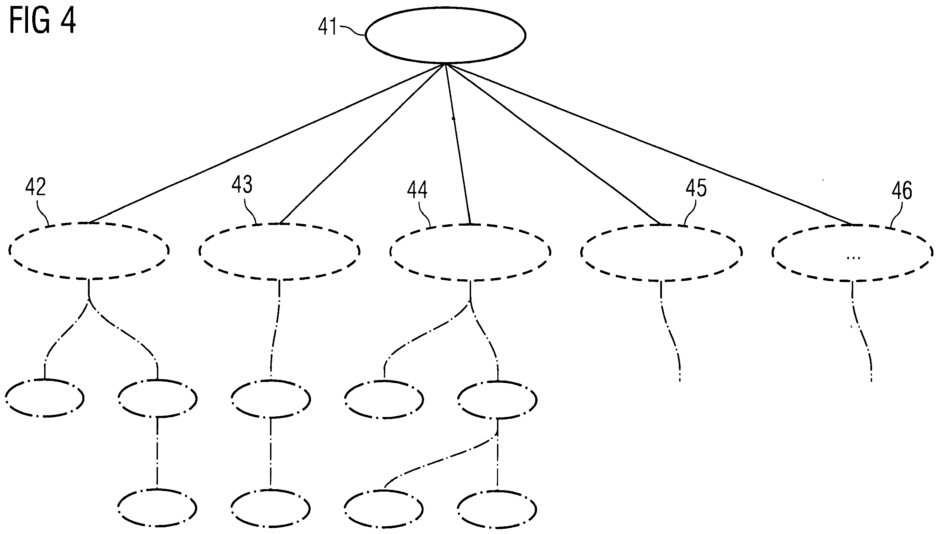

Die beschriebenen Verfahrensschritte können iterativ ausgeführt werden. Fig. 4 zeigt einen Graphen zur Verdeutlichung eines Suchens mindestens eines Anfragedatenelementes gemäß einem Verfahren zum speichereffizienten Suchen mindestens eines Anfragedatenelementes in einem Graph gemäß einem Aspekt der vorliegenden Erfindung. Im Folgenden folgt eine kurze Übersicht der Zeichenketten, welche die dargestellten Knoten bezeichnen.

| Zeichenketten der Knoten in Fig. 4 | |
|---|---|
| 41 | "site" |
| 42 | "regions" |
| 43 | "categories" |
| 44 | "catgraph" |
| 45 | "people" |
| 46 | ... |

Der in Fig. 4 dargestellte Graph verfügt über ein Wurzeldatenelement 41 "site". Ferner verfügt der in Fig. 4 dargestellte Graph über Unterdatenelemente 42, 43, 44, 45 und 46. Ein Anfragedatenelement gemäß einer Suchspezifikationssprache XPath ist zum Beispiel der Ausdruck
"/site[1]/people[1]/person[2]".

Dieser Ausdruck bzw. dieses Anfragedatenelement umfasst die drei Anfragedatensegmente "site[1]", "people[1]" sowie "person[2]". Die Anfragedatensegmente können auch als XPath-Schritte bezeichnet werden. Das beschriebene Anfragedatenelement bezieht sich auf einen Pfad innerhalb dem Graph, welcher sich entlang der Knoten "site", "people" und einem weiteren in der vorliegenden Figur nicht gezeigten Knoten "person". In analoger Weise zu der Repräsentation des Anfragedatenelementes erfolgt das Erstellen eines Indexing-Mechanismus gemäß dem Verfahren zum speichereffizienten Suchen gemäß einem Aspekt der vorliegenden Erfindung.

Hierbei wird anstatt die Anfragedatensegmente als Zeichensequenz darzustellen, die Codierung des Anfragedatenelementes mittels kompakter Identifizierungselemente durchgeführt. Beispielsweise kann ein Teil des Anfragedatenelementes "_{/}site(1)/people(1)" als ein kompaktes Identifizierungselement von 233 Bytes dargestellt werden. Folglich wird ein Offset von 233 Bytes definiert, der den Speicherbedarf des Anfragedatenelementes "/site[1]/peopole[1] " spezifiziert. Bei einem Ansprechen des Anfragedatenelementes "people" wird folglich der Offset von 233 Bytes gemäß dem Verfahren zum speichereffizienten Suchen gemäß einem Aspekt der vorliegenden Erfindung übersprungen. Folglich wird lediglich ein relevanter Bestandteil des Graphen im Speicher gehalten, ohne nicht mehr benötigte Datenelemente mitzuführen.

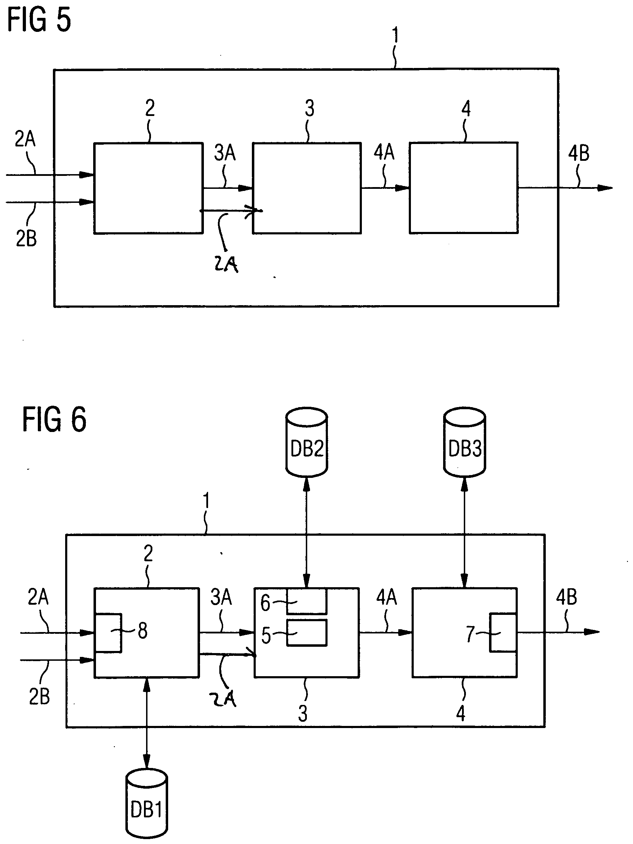

Fig. 5 beschreibt ein Blockdiagramm einer Vorrichtung 1 zum speichereffizienten Suchen mindestens eines Anfragedatenelementes 2B in einem Graph 2A. Der Graph 2A kann in einem Speicher abgelegt sein oder über eine Leitung bzw. ein Netzwerk empfangen werden. Die Vorrichtung 1 weist eine Segmentiereinheit 2 zum Segmentieren des Anfragedatenelementes 2B in mindestens ein Anfragedatensegment 3A auf.

Die Vorrichtung 1 weist ferner eine Iterationseinheit 3 zum iterativen Ausführen der folgenden Unterschritte zum Identifizieren des mindestens einen Anfragedatensegmentes 3A in dem Graph 2A auf:
a) Vergleichen eines Unterdatenelementes mit dem jeweiligen Anfragedatensegment 3A, wobei das Datenelement mit einem Oberdatenelement 4A mittels genau einer Kante in dem Graph 2A verbunden ist; und
b) Abspeichern des Unterdatenelementes als Oberdatenelement 4A, falls das Unterdatenelement das jeweilige Anfragedatensegment 3A aufweist.

Die Vorrichtung 1 weist ferner eine Oberdatenelementbereitstellungseinheit 4 zum Bereitstellen des abgespeicherten Oberdatenelementes 4B auf, falls das mindestens eine Anfragedatensegment 3A in dem Graph identifiziert wurde.

Fig. 6 zeigt ein detailliertes Blockdiagramm einer Vorrichtung 1 zum speichereffizienten Suchen gemäß einem Aspekt der vorliegenden Erfindung und unterscheidet sich von der in Fig. 5 gezeigten Vorrichtung wie folgt:
Im vorliegenden Ausführungsbeispiel kommuniziert die Segmentiereinheit 2 mit einem ersten Datenspeicher DB1. In dem Datenspeicher DB1 ist eine Metrik hinterlegt, welche einen Hinweis darauf gibt, wie das Anfragedatenelement 2B in mindestens ein Anfragedatensegment 3A segmentiert werden soll. Ferner weist die Iterationseinheit eine Vergleichseinheit 5 auf, welche das Unterdatenelement mit dem Anfragedatensegment 3A vergleicht. Die Vergleichseinheit 5 ist ferner geeignet, zum Beispiel ein XML-Dokument zu parsen. Weist das Unterdatenelement mindestens ein Anfragedatensegment 3A auf, so veranlasst eine Speichereinheit 6 ein Abspeichern des Unterdatenelementes als Oberdatenelement 4A in einem weiteren Datenspeicher DB2.

Die Oberdatenelementbereitstellungseinheit 4 stellt das Oberdatenelement 4B bereit, welches mittels einer Ausgabeeinheit 7 durchgeführt wird. Die Ausgabeeinheit 7 ist hierbei geeignet, das Oberdatenelement 4B in eine geeignete Repräsentation zu formatieren. Bei der Ausgabeeinheit 7 kann es sich zum Beispiel um einen Bildschirm oder einen Drucker handeln, welcher geeignet ist, das abgespeicherte Oberdatenelement 4B auszugeben. Hierzu kann die Oberdatenelementbereitstellungseinheit 4 auf einen weiteren Datenspeicher DB3 zugreifen, welcher zum Beispiel Konfigurationen der Ausgabeeinheit 7 bereitstellt. Zum Beispiel stellt der Datenspeicher DB3 eine Druckerkonfiguration bereit.

Bei der Vorrichtung 1, der Segmentiereinheit 2, der Iterationseinheit 3, der Oberdatenelementbereitstellungseinheit 4, der Vergleichseinheit 5 sowie der Abspeicherungseinheit 6 kann es sich um einen Prozessor, Mikroprozessor, Computer, Computersystem, Central Processing Unit, arithmetische Recheneinheit und/oder um einen Schaltkreis handeln.

Die beschriebenen Datenspeicher, insbesondere die Datenspeicher DB1, DB2 und/oder DB3 können jegliche Art von Speichern, zum Beispiel eine Festplatte, Flashdisk, USB-Stick, Floppy Disk, Diskette, CD, DVD, bluray Disk, Magnetband und/oder Wechseldatenträger umfassen.

## Patentansprüche

1. Verfahren zum speichereffizienten Suchen eines Anfragedatenelementes (2B) in einem Graph (2A), insbesondere zur Verwendung in einem mobilen Endgerät, mit den Schritten:
- Segmentieren (100) des Anfragedatenelementes (2B) in eine Mehrzahl von geordneten Anfragedatensegmenten (3A) ;
- Iteratives Ausführen (101) der folgenden Unterschritte zum Identifizieren mindestens einen Anfragedatensegmentes (3A) in dem Graph (2A) ausgehend von einem Oberdatenelement (4A) mit mindestens einem Unterdatenelement gemäß der Ordnung der geordneten Anfragedatensegmente (3A), wobei bei einem ersten Ausführen der nachfolgenden Schritte das Oberdatenelement (4A) einem Wurzeldatenelement entspricht:
a) Vergleichen eines Unterdatenelementes mit dem jeweiligen Anfragedatensegment (3A), wobei das Unterdatenelement mit einem Oberdatenelement (4A) mittels genau einer Kante in dem Graph (2A) verbunden ist;
b) Abspeichern des Unterdatenelementes als Oberdatenelement (4B) in einem Datenspeicher, falls das Unterdatenelement das jeweilige Anfragedatensegment (3A) aufweist, wobei ein zeitlich zuerst abgespeichertes Oberdatenelement (4B) durch das Unterdatenelement überschrieben wird und wobei sich weitere Verfahrensschritte auf das als Oberdatenelement (4B) gespeicherte Unterdatenelement und ein weiteres Anfragedatensegment (3A) beziehen; und
c) Wiederholen der Schritte a) und b) mit einem weiteren Unterdatenelement, falls das Unterdatenelement das jeweilige Anfragedatensegment (3A) nicht aufweist;
- Bereitstellen (102) des abgespeicherten Oberdatenelementes (4B) mittels eines Auslesens aus dem Datenspeicher, falls alle Anfragedatensegmente (3A) in dem Graph (2A) identifiziert werden.

2. Verfahren nach Anspruch 1, wobei das Abspeichern des Unterdatenelementes als Oberdatenelement (4B) derart ausgeführt wird, dass ein zeitlich zuerst abgespeichertes Oberdatenelement (4B) aus einem Speicher gelöscht wird und das Unterdatenelement in den Speicher geschrieben wird.

3. Verfahren nach einem der Ansprüche 1 bis 2, wobei das Anfragedatenelement (2B) einen Pfad in dem Graphen (2A) beschreibt.

4. Verfahren nach einem der Ansprüche 1 bis 3, wobei das Anfragedatensegment (3A) einen Binärcode, ein Oberdatenelement, ein Unterdatenelement, einen Knoten, eine URL, eine URI, einen virtuellen Ordner und/oder einen Dateinamen aufweist.

5. Verfahren nach einem der Ansprüche 1 bis 4, wobei zumindest ein Teil des Graphen (2A) durch ein XML-Dokument, einen Binärcode, eine graphische Repräsentation, eine textuelle Beschreibung, eine Ontologiesprache, ein formales Modell, eine relationale Datenbank und/oder eine Graphenbeschreibungssprache beschrieben wird.

6. Verfahren nach einem der Ansprüche 1 bis 5, wobei das Anfragedatensegment (3A), das Anfragedatenelement (2B), das Unterdatenelement und/oder das Oberdatenelement (4A, 4B) mindestens ein Attribut aufweisen.

7. Vorrichtung (1) zum speichereffizienten Suchen eines Anfragedatenelementes (2B) in einem Graph (2A), insbesondere unter Verwendung des Verfahrens gemäß einem der Ansprüche 1 bis 6, mit:
- einer Segmentiereinheit (2) zum Segmentieren des Anfragedatenelementes (2B) in eine Mehrzahl von geordneten Anfragedatensegmenten (3A);
- einer Iterationseinheit (3) zum iterativen Ausführen der folgenden Unterschritte zum Identifizieren mindestens einen Anfragedatensegmentes (3A) in dem Graph (2A) ausgehend von einem Oberdatenelement (4A) mit mindestens einem Unterdatenelement gemäß der Ordnung der geordneten Anfragedatensegmenten (3A), wobei bei einem ersten Ausführen der nachfolgen-den Schritte das Oberdatenelement (4A) einem Wurzeldatenelement entspricht:
a) Vergleichen eines Unterdatenelementes mit dem jeweiligen Anfragedatensegment (3A), wobei das Unterdatenelement mit einem Oberdatenelement (4A) mittels genau einer Kante in dem Graph (2A) verbunden ist;
b) Abspeichern des Unterdatenelementes als Oberdatenelement (4B) in einem Datenspeicher, falls das Unterdatenelement das jeweilige Anfragedatensegment (3A) aufweist, wobei ein zeitlich zuerst abgespeichertes Oberdatenelement (4B) durch das Unterdatenelement überschrieben wird und wobei sich weitere Verfahrensschritte auf das als Oberdatenelement (4B) gespeicherte Unterdatenelement und ein weiteres Anfragedatensegment (3A) beziehen; und
c) Wiederholen der Schritte a) und b) mit einem weiteren Unterdatenelement, falls das Unterdatenelement das jeweilige Anfragedatensegment (3A) nicht aufweist;
- einer Oberdatenelementbereitstellungseinheit (4) zum Bereitstellen des abgespeicherten Oberdatenelementes (4B) mittels eines Auslesens aus dem Datenspeicher, falls alle Anfragedatensegment (3A) in dem Graph (2A) identifiziert sind.

8. Vorrichtung nach Anspruch 7, welche einen Datenspeicher zum Abspeichern von mindestens einem Teil des Graphen aufweist.

9. Vorrichtung nach einem der Ansprüche 7 oder 8, welche eine Ausleseeinheit (8) zum Auslesen von mindestens einem Teil des Graphen (2A) aus einem entfernten Datenspeicher aufweist.

10. Vorrichtung nach einem der Ansprüche 8 bis 9, welche eine erste Schnittstelleneinheit zum Empfangen zumindest eines Teils des Graphen (2A), des Anfragedatenelementes (2B), des Anfragedatensegmentes (3A), des Oberdatenelementes (4B) und/oder des Unterdatenelementes aufweist.

11. Vorrichtung nach einem der Ansprüche 8 bis 10, welche eine zweite Schnittstelleneinheit zum Bereitstellen zumindest eines Teils des Graphen (2A), des Anfragedatenelementes (2B), des Anfragedatensegmentes (3A), des Oberdatenelementes (4B) und/oder des Unterdatenelementes aufweist.

12. Vorrichtung nach Anspruch 11, wobei die erste Schnittstelleneinheit und die zweite Schnittstelleneinheit als eine kombinierte Schnittstelle vorliegen.

13. Computerprogrammprodukt, welches Befehle umfasst, die bei Ausführung auf einem Computer diesen zur Durchführung eines Verfahrens gemäß einem der Ansprüche 1 bis 6 veranlassen.

14. Datenspeicher auf dem ein Computerprogrammprodukt gemäß Anspruch 13 abgespeichert ist.

## Claims

1. Method for searching in a memory-efficient manner for a query data element (2B) in a graph (2A), in particular for use in a mobile terminal, comprising the steps:
- segmenting (100) the query data element (2B) into a plurality of ordered query data segments (3A);
- iteratively executing (101) the following subsidiary steps for identifying at least one query data segment (3A) in the graph (2A), starting from a superordinate data element (4) having at least one subordinate data element according to the order of the ordered query data segments (3A), wherein in a first execution of the following steps the superordinate data element (4A) corresponds to a root data element:
a) comparing a subordinate data element with the respective query data segment (3A), wherein the subordinate data element is connected to a superordinate data element (4A) by means of exactly one edge in the graph (2A);
b) storing the subordinate data element in a data memory as a superordinate data element (4B), if the subordinate data element comprises the respective query data segment (3A), wherein a previously stored superordinate data element (4B) is overwritten by the subordinate data element and wherein further method steps relate to the subordinate data element stored as a superordinate data element (4B) and to a further query data segment (3A); and
c) repetition of steps a) and b) with a further subordinate data element, if the subordinate data element does not comprise the respective query data segment (3A);
- providing (102) the stored superordinate data element (4B) by reading out from the data memory, if all query data segments (3A) are identified in the graph (2A).

2. Method according to claim 1, wherein the storage of the subordinate data element as a superordinate data element (4B) is executed in such a way that a previously stored superordinate data element (4B) is deleted from a memory and the subordinate data element is written into the memory.

3. Method according to one of the claims 1 to 2, wherein the query data element (2B) describes a path in the graph (2A) .

4. Method according to one of the claims 1 to 3, wherein the query data segment (3A) comprises a binary code, a superordinate data element, a subordinate data element, a node, a URL, a URI, a virtual folder and/or a file name.

5. Method according to one of the claims 1 to 4, wherein at least part of the graph (2A) is described by an XML document, a binary code, a graphical representation, a textual description, an ontological language, a formal model, a relational database and/or a graph description language.

6. Method according to one of the claims 1 to 5, wherein the query data segment (3A), the query data element (2B), the subordinate data element and/or the superordinate data element (4A, 4B) have at least one attribute.

7. Apparatus (1) for searching in a memory-efficient manner for a query data element (2B) in a graph (2A), in particular using the method according to one of the claims 1 to 6, comprising:
- a segmentation unit (2) for segmenting the query data element (2B) into a plurality of ordered query data segments (3A);
- an iteration unit (3) for iteratively executing the following subsidiary steps for identifying at least one query data segment (3A) in the graph (2A), starting from a superordinate data element (4A) having at least one subordinate data element according to the order of the ordered query data segments (3A), wherein in a first execution of the following steps the superordinate data element (4A) corresponds to a root data element:
a) comparing a subordinate data element with the respective query data segment (3A), wherein the subordinate data element is connected to a superordinate data element (4A) by means of exactly one edge in the graph (2A);
b) storing the subordinate data element in a data memory as a superordinate data element (4B), if the subordinate data element comprises the respective query data segment (3A), wherein a previously stored superordinate data element (4B) is overwritten by the subordinate data element and wherein further method steps relate to the subordinate data element stored as a superordinate data element (4B) and to a further query data segment (3A); and
c) repetition of steps a) and b) with a further subordinate data element, if the subordinate data element does not comprise the respective query data segment (3A);
- a superordinate data element provision unit (4) for providing the stored superordinate data element (4B) by reading out from the data memory, if all query data segments (3A) are identified in the graph (2A).

8. Apparatus according to claim 7, featuring a data memory for storing at least part of the graph.

9. Apparatus according to one of the claims 7 or 8, featuring a readout unit (8) for reading out at least part of the graph (2A) from a remote data memory.

10. Apparatus according to one of the claims 8 to 9, featuring a first interface unit for receiving at least part of the graph (2A), of the query data element (2B), of the query data segment (3A), of the superordinate data element (4B) and/or of the subordinate data element.

11. Apparatus according to one of the claims 8 to 10, featuring a second interface unit for providing at least part of the graph (2A), of the query data element (2B), of the query data segment (3A), of the superordinate data element (4B) and/or of the subordinate data element.

12. Apparatus according to claim 11, wherein the first interface unit and the second interface unit are available as a combined interface.

13. Computer program product which comprises commands, which on execution on a computer prompt the latter to implement a method according to one of the claims 1 to 6.

14. Data memory on which a computer program product according to claim 13 is stored.

## Revendications

1. Procédé de recherche économe en mémoire d'un élément de données de demande (2B) dans un graphique (2A), plus particulièrement destiné à être utilisé dans un terminal mobile, avec les étapes suivantes :
- segmentation (100) de l'élément de données de demande (2B) en une pluralité de segments de données de demande (3A) ordonnés ;
- exécution itérative (101) des sous-étapes suivantes pour l'identification d'au moins un segment de données de demande (3A) dans le graphique (2A) à partir d'un élément de données supérieur (4A) avec au moins un élément de données inférieur selon l'ordre des segments de données de demande (3A) ordonnés, dans lequel, lors d'une première exécution des étapes suivantes, l'élément de données supérieur (4A) correspond à un élément de données racine :
a) comparaison d'un élément de données inférieur avec le segment de données de demande (3A) correspondant, dans lequel l'élément de données inférieur est relié avec un élément de données supérieur (4A) au moyen d'exactement une arête dans le graphique (2A) ;
b) enregistrement de l'élément de données inférieur en tant qu'élément de données supérieur (4B) dans une mémoire de données si l'élément de données inférieur comprend le segment de données de demande (3A) correspondant, dans lequel un élément de données supérieur (4B) enregistré auparavant est écrasé par l'élément de données inférieur et dans lequel d'autres étapes concernent l'élément de données inférieur enregistré en tant qu'élément de données supérieur (4B) et un autre segment de données de demande (3A) ; et
c) répétition des étapes a) et b) avec un autre élément de données inférieur si l'élément de données inférieur ne comprend pas le segment de données de demande (3A) correspondant ;
- mise à disposition (102) de l'élément de données supérieur (4B) enregistré au moyen d'une lecture de la mémoire de données si tous les segments de données de demande (3A) sont identifiés dans le graphique (2A).

2. Procédé selon la revendication 1, dans lequel l'enregistrement de l'élément de données inférieur en tant qu'élément de données supérieur (4B) est exécuté de façon à ce qu'un élément de données supérieur (4B) enregistré auparavant soit supprimé d'une mémoire et à ce que l'élément de données inférieur soit écrit dans la mémoire.

3. Procédé selon l'une des revendications 1 à 2, dans lequel l'élément de données de demande (2B) décrit un chemin dans le graphique (2A).

4. Procédé selon l'une des revendications 1 à 3, dans lequel le segment de données de demande (3A) comprend un code binaire, un élément de données supérieur, un élément de données inférieur, un nœud, une URL, une URI, un répertoire virtuel et/ou un nom de fichier.

5. Procédé selon l'une des revendications 1 à 4, dans lequel au moins une partie du graphique (2A) est décrite par un document XML, un code binaire, une représentation graphique, une description textuelle, un langage ontologique, un modèle formel, une base de données relationnelle et/ou un langage de description de graphiques.

6. Procédé selon l'une des revendications 1 à 5, dans lequel le segment de données de demande (3A), l'élément de données de demande (2B), l'élément de données inférieur et/ou l'élément de données supérieur (4A, 4B) comprennent au moins un attribut.

7. Dispositif (1) pour la recherche économe en mémoire d'un élément de données de demande (2B) dans un graphique (2A), plus particulièrement à l'aide d'un procédé selon l'une des revendications 1 à 6, avec :
- une unité de segmentation (2) pour la segmentation de l'élément de données de demande (2B) en une pluralité de segments de données de demande (3A) ordonnés ;
- une unité d'itération (3) pour l'exécution itérative des sous-étapes suivantes pour l'identification d'au moins un segment de données de demande (3A) dans le graphique (2A) à partir d'un élément de données supérieur (4A) avec au moins un élément de données inférieur selon l'ordre des segments de données de demande (3A) ordonnés, dans lequel, lors d'une première exécution des étapes suivantes, l'élément de données supérieur (4A) correspond à un élément de données racine :
a) comparaison d'un élément de données inférieur avec le segment de données de demande (3A) correspondant, dans lequel l'élément de données inférieur est relié avec l'élément de données supérieur (4A) au moyen d'exactement une arête dans le graphique (2A) ;
b) enregistrement de l'élément de données inférieur en tant qu'élément de données supérieur (4B) dans une mémoire de données si l'élément de données inférieur comprend le segment de données de demande (3A) correspondant, dans lequel un élément de données supérieur (4B) enregistré auparavant est écrasé par l'élément de données inférieur et dans lequel d'autres étapes concernent l'élément de données inférieur enregistré en tant qu'élément de données supérieur (4B) et un autre segment de données de demande (3A) ; et
c) répétition des étapes a) et b) avec un autre élément de données inférieur si l'élément de données inférieur ne comprend pas le segment de données de demande (3A) correspondant ;
- une unité de mise à disposition d'éléments de données supérieurs (4) pour la mise à disposition de l'élément de données supérieur (4B) enregistré au moyen d'une lecture de la mémoire de données si tous les segments de données de demande (3A) dans le graphique (2A) sont identifiés.

8. Dispositif selon la revendication 7, qui comprend une mémoire de données pour l'enregistrement d'au moins une partie du graphique.

9. Dispositif selon l'une des revendications 7 ou 8, qui comprend une unité de lecture (8) pour la lecture d'au moins une partie du graphique (2A) dans une mémoire de données distante.

10. Dispositif selon l'une des revendications 8 ou 9, qui comprend une première unité d'interface pour la réception d'au moins une partie du graphique (2A), de l'élément de données de demande (2B), du segment de données de demande (3A), de l'élément de données supérieur (4B) et/ou de l'élément de données inférieur.

11. Dispositif selon l'une des revendications 8 à 10, qui comprend une deuxième unité d'interface pour la mise à disposition d'au moins une partie du graphique (2A), de l'élément de données de demande (2B), du segment de données de demande (3A), de l'élément de données supérieur (4B) et/ou de l'élément de données inférieur.

12. Dispositif selon la revendication 11, dans lequel la première unité d'interface et la deuxième unité d'interface se présentent sous la forme d'une interface combinée.

13. Produit de programme informatique qui comprend des instructions qui, lors de l'exécution sur un ordinateur, font en sorte que celui-ci exécute un procédé selon l'une des revendications 1 à 6.

14. Mémoire de données sur laquelle un produit de programme informatique selon la revendication 13 est enregistré.
